(19) **Europäisches Patentamt / European Patent Office / Office européen des brevets**

(11) **EP 4 471 971 A1**

(12) **EUROPEAN PATENT APPLICATION**
published in accordance with Art. 153(4) EPC

(43) Date of publication:
04.12.2024 Bulletin 2024/49

(21) Application number: 23746892.1

(22) Date of filing: 23.01.2023

(51) International Patent Classification (IPC):
*H01M 50/538* (2021.01)     *H01M 50/107* (2021.01)
*H01M 50/342* (2021.01)

(52) Cooperative Patent Classification (CPC):
H01M 50/107; H01M 50/342; H01M 50/538;
Y02E 60/10

(86) International application number:
PCT/JP2023/001893

(87) International publication number:
WO 2023/145680 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022011695

(71) Applicant: Panasonic Energy Co., Ltd.
Osaka 570-8511 (JP)

(72) Inventors:
• TOMINAGA Yusuke
Kadoma-shi, Osaka 571-0057 (JP)
• OKIMOTO Ryota
Kadoma-shi, Osaka 571-0057 (JP)

(74) Representative: Novagraaf International SA
Chemin de l'Echo 3
1213 Onex, Geneva (CH)

(54) **BATTERY AND CURRENT COLLECTOR**

(57) According to the present invention, a cylindrical battery (10) comprises: an electrode assembly (14) in which a long negative electrode (12), having a core body exposed section (12c) in which a negative electrode core body is exposed on one side in the width direction thereof, and a long positive electrode (11) are wound with a separator (13) therebetween; and a lower current collector (19) which has a flat part (51) that axially overlaps a central portion of a hollow section (14a) of the electrode assembly (14) and does not have a through-hole, a protruding bead part (56) to which the core body exposed section (12c) is joined, and one or more through-holes (52a) positioned on a further outer circumferential side in the radial direction than the flat part (51) and further inside in the radial direction than the protruding bead part (56).

Figure 1

EP 4 471 971 A1

**Description**

TECHNICAL FIELD

The present disclosure relates to a battery and a current collector.

BACKGROUND ART

Among conventional cylindrical batteries, there is a cylindrical battery described in PATENT LITERATURE 1. This cylindrical battery comprises an electrode assembly in which a positive electrode and a negative electrode are wound with a separator interposed between the positive electrode and the negative electrode, a bottomed cylindrical exterior housing can that houses the electrode assembly, and a current collector that is arranged on each side in an axial direction of the electrode assembly. The current collector has a circular disk shape, and has a through hole at center portion in a radial direction. The current collector also has a plurality of through holes that are located at intervals in a circumferential direction on an outer circumferential side. The through hole at the center portion and the plurality of through holes on the outer circumferential side are provided to pour an electrolytic solution into the electrode assembly.

CITATION LIST

PATENT LITERATURE

PATENT LITERATURE 1: Japanese Unexamined Patent Application Publication No. 2007-335156

SUMMARY

The center portion of the current collector is often joined to a conductive portion such as a bottom plate of the exterior housing can, but a through hole provided at a center portion of the current collector hinders a reliable joint. On the other hand, when abnormal heat generation occurs in the battery and a safety vent of the battery is operated, high-temperature gas can be preferably guided smoothly to the safety vent, but from this viewpoint, the current collector preferably has a gas passing portion. Therefore, it is an advantage of the present disclosure to provide a battery in which a current collector can be easily and reliably joined to a conductive portion such as a bottom plate of an exterior housing can, and gas easily flows smoothly to a safety vent when the safety vent is in operation. It is also an advantage of the present disclosure to provide a current collector that can achieve such a battery.

In order to solve the above problem, a battery according to the present disclosure comprises an electrode assembly in which a long strip-shaped first electrode having a core exposed portion in which a first electrode core is exposed to one side in a width direction and a long strip-shaped second electrode are wounded with a separator interposed between the long strip-shaped first electrode and the long strip-shaped second electrode, and a current collector that has a flat plate portion that overlaps with a center portion of a hollow of the electrode assembly in an axial direction and has no through hole, a joint portion to which the core exposed portion is joined, and one or more through holes that are located on an outer circumferential side in a radial direction than the flat plate portion and on an inner side in the radial direction than the joint portion.

A current collector according to the present disclosure is a current collector to which an electrode core located on one side in an axial direction of a wound-type electrode assembly is joined, the current collector comprising a flat plate portion that is located at a center portion and has no through hole, a joint portion that extends in a radial direction and to which the electrode core is joined, and one or more through holes that are located radially outward than the flat plate portion and radially inward than the joint portion.

The above-described axial direction refers to an axial direction of the above-described electrode assembly, and corresponds to an axial direction of a battery when the battery is a cylindrical battery. The above-described radial direction refers to a radial direction of the above-described electrode assembly, and corresponds to a radial direction of a battery when the battery is a cylindrical battery.

According to a battery of the present disclosure, a current collector can be reliably joined to a conductive portion such as a bottom plate of an exterior housing can, and gas easily flows smoothly to a safety vent when the safety vent is in operation. According to a current collector of the present disclosure, a battery can be achieved in which good joining to a conductive portion such as a bottom plate of an exterior housing can be easily achieved, and gas easily flows smoothly to a safety vent when the safety vent is in operation.

BRIEF DESCRIPTION OF DRAWING

FIG. 1 is an axial sectional view of a cylindrical battery according to an embodiment of the present disclosure.

FIG. 2 is a perspective view of an electrode assembly.

FIG. 3 is a schematic plan view of a negative electrode that is spread in an elongated shape.

FIG. 4 is a schematic plan view of a positive electrode that is spread in an elongated shape.

FIG. 5 is a perspective view of a lower current collector.

FIG. 6 is a plan view of the lower current collector when viewed in a thickness direction from an opposite side to a side on which a negative electrode core is joined.

FIG. 7 is an axial sectional view of the lower current collector.

FIG. 8 is a perspective view of a lower current collector of a comparative example.

FIG. 9 is a plan view of the lower current collector of the comparative example when viewed in a thickness direction from an opposite side to a side on which a negative electrode core is joined.

FIG. 10 is an axial sectional view of the lower current collector of the comparative example.

FIG. 11 is a schematic plan view of the lower current collector of the comparative example.

FIG. 12 is a schematic sectional view of an axial lower side of a cylindrical battery of the comparative example comprising the lower current collector of the comparative example.

FIG. 13 is a diagram for illustrating a method of joining the lower current collector of the comparative example to a bottom plate of an exterior housing can.

FIG. 14 is a schematic plan view of the lower current collector of the above-described embodiment.

FIG. 15 is a schematic sectional view of an axial lower side of the cylindrical battery of the above-described embodiment.

FIG. 16 is a diagram for illustrating a method of joining the lower current collector of the above-described embodiment to a bottom plate of an exterior housing can.

FIG. 17 is a perspective view of a lower current collector of a modified example.

FIG. 18 is a plan view of the lower current collector of the modified example when viewed in a thickness direction from an opposite side to a side on which a negative electrode core is joined.

FIG. 19 is an axial sectional view of the lower current collector of the modified example.

FIG. 20 is a schematic sectional view of an axial lower end of the cylindrical battery of the above-described embodiment.

FIG. 21 is a plan view of the cylindrical battery of the above-described embodiment in a state where an easy-to-rupture portion ruptures and a safety vent scatters, when viewed from the axial lower side.

FIG. 22 is a schematic sectional view of an axial lower end of a cylindrical battery of the modified example.

FIG. 23 is a plan view of a cylindrical battery of the above-described modified example in a state where an easy-to-rupture portion ruptures and a safety vent scatters, when viewed from an axial lower side.

FIG. 24 is a schematic sectional view of an axial lower end of the cylindrical battery of the above-described comparative example.

FIG. 25 is a plan view of the cylindrical battery of the above-described comparative example in a state where an easy-to-rupture portion ruptures and a safety vent scatters, when viewed from an axial lower side.

DESCRIPTION OF EMBODIMENTS

Hereinafter, an embodiment of a battery according to the present disclosure will be described in detail with reference to the drawings. In the following, a cylindrical battery 10 which is a non-aqueous electrolyte secondary battery (lithium ion battery) will be exemplified as a battery of an embodiment, but the battery of the present disclosure is not limited thereto. The battery of the present disclosure may be a primary battery, or may be a secondary battery. Alternatively, the battery of the present disclosure may be a battery using an aqueous electrolyte, or may be a battery using a non-aqueous electrolyte. Alternatively, the battery of the present disclosure may be a rectangular battery. It is only required that the battery of the present disclosure has a wound-type electrode assembly.

In a case where a plurality of embodiments, modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member among different drawings are not necessarily the same. In this specification, a sealing assembly 17 side in an axial direction (height direction) of a battery case 15 is defined as "upper", and a bottom plate 68 side of an exterior housing can 16 in the axial direction is defined as "lower". In the following description, the radial direction refers to a radial direction of the electrode assembly 14, and corresponds to a radial direction of the cylindrical battery 10. The circumferential direction refers to a circumferential direction of the electrode assembly 14, and corresponds to a circumferential direction of the cylindrical battery 10. Furthermore, of the components described below, components that are not described in the independent claim indicating the highest-level concept are arbitrary components, and are not essential components.

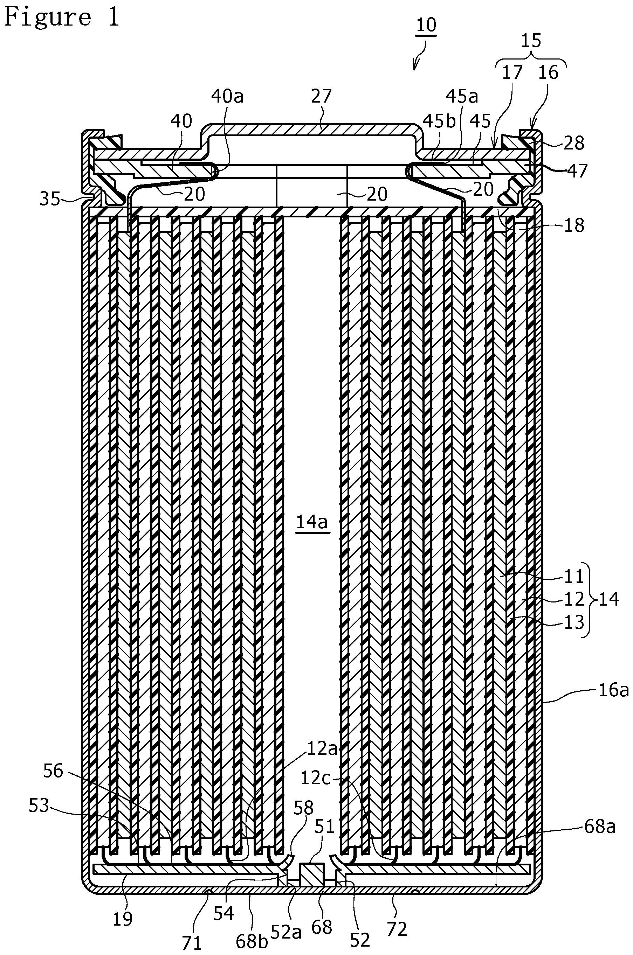

FIG. 1 is an axial sectional view of the cylindrical battery 10 according to an embodiment of the present disclosure. In the present embodiment, a case where the first electrode is a negative electrode 12 and the second electrode is a positive electrode 11 will be described. As illustrated in FIG. 1, the cylindrical battery 10 comprises the wound-type electrode assembly 14, a non-aqueous electrolyte (not illustrated), the exterior housing can 16 that houses the electrode assembly 14 and the non-aqueous electrolyte, and the sealing assembly 17. The electrode assembly 14 includes the positive electrode 11, the negative electrode 12, and a separator 13 interposed between the positive electrode 11 and the negative electrode 12, and has a wound structure in which the positive electrode 11 and the negative electrode 12 are wound with the separator 13 interposed therebetween. The battery case 15 is composed of the bottomed cylindrical exterior housing can 16 and the sealing assembly 17 with which an opening of the exterior housing can 16 is capped.

The non-aqueous electrolyte includes a non-aqueous solvent, and an electrolyte salt dissolved in the non-aqueous solvent. For a non-aqueous solvent, for example, esters, ethers, nitriles, amides, or mixed solvents containing two or more selected from the foregoing may be used. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gelatinous polymer or the like. As the electrolyte salt, a lithium salt such as $LiPF_6$ is used.

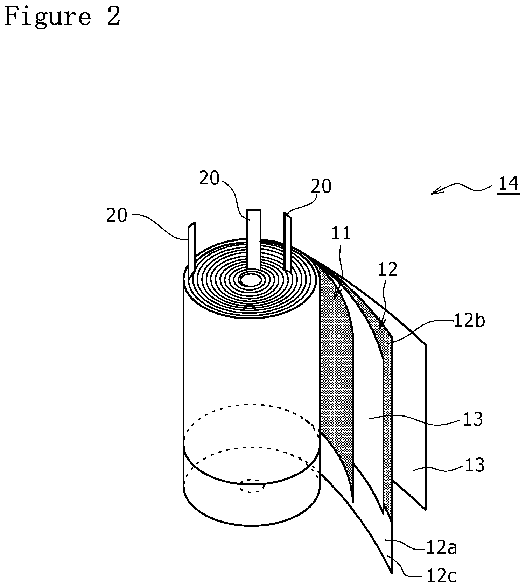

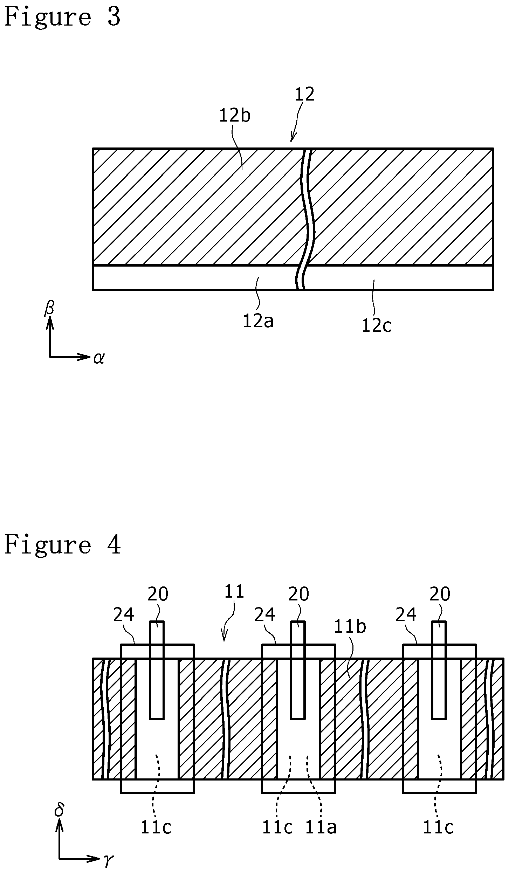

FIG. 2 is a perspective view of the electrode assembly 14. As illustrated in FIG. 2, the electrode assembly 14 has the long strip-shaped positive electrode 11, the long strip-shaped negative electrode 12, and the two long strip-shaped separators 13. A plurality of positive electrode leads 20 are joined to the positive electrode 11 at intervals in a longitudinal direction of the positive electrode 11, and in an example illustrated in FIGS. 1 and 2, the three positive electrode leads 20 are joined to the positive electrode 11 to be electrically connected to the positive electrode 11. FIG. 3 is a schematic plan view of the negative electrode 12 that is spread in an elongated shape. As illustrated in FIG. 3, the negative electrode 12 has a negative electrode core exposed portion 12c on which a negative electrode mixture layer 12b is not provided on a lower end in a width direction indicated by an arrow $\beta$ in a negative electrode core 12a. The negative electrode core exposed portion 12c has a band shape, and is continuously provided from one end to the other end in the longitudinal direction indicated by an arrow $\alpha$ in the negative electrode 12. The negative electrode core 12a is an example of a first electrode core. As illustrated in FIG. 2, an axial lower end of the electrode assembly 14 is composed of the negative electrode core exposed portion 12c. The negative electrode 12 is formed to be one size larger than the positive electrode 11 in order to suppress precipitation of lithium, and is formed to be longer in the longitudinal direction and the width direction (short direction) than the positive electrode 11. The two separators 13 are each formed to be at least one size larger than the positive electrode 11, and are arranged so as to interpose the positive electrode 11 therebetween.

FIG. 4 is a schematic plan view of the positive electrode 11 that is spread in an elongated shape. As illustrated in FIG. 4, the positive electrode 11 has a positive electrode core 11a and a positive electrode mixture layer 11b formed on each surface of the positive electrode core 11a. For the positive electrode core 11a, there can be used a foil of a metal such as aluminum or an aluminum alloy, the foil being stable in a potential range of the positive electrode 11, a film in which such a metal is provided on a surface layer thereof, or the like. The positive electrode mixture layer 11b includes a positive electrode active material, a conductive agent, and a binder. The positive electrode 11 can be produced by, for example, applying a positive electrode mixture slurry including a positive electrode active material, a conductive agent, a binder, and the like on a positive electrode core 11a, drying the resulting coating film, and then compressing the coating film to form a positive electrode mixture layer 1 1b on each surface of the positive electrode core 11a.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, W, or the like. An example of the lithium-containing metal composite oxide is preferably a composite oxide containing at least one of Ni, Co, Mn and Al.

Examples of conductive agents included in the positive electrode mixture layer 1 1b may include carbon materials such as carbon black, acetylene black, Ketjen black, and graphite. Examples of binders included in the positive electrode mixture layer 11b may include fluororesins such as polytetrafluoroethylene (PTFE) and polyvinylidene fluoride (PVdF), polyacrylonitrile (PAN), a polyimide resin, an acrylic resin, and a polyolefin resin. These resins may be used in combination with cellulose derivatives such as carboxymethyl cellulose (CMC) or a salt thereof, a polyethylene oxide (PEO), or the like.

As illustrated in FIG. 4, the positive electrode 11 has, for example, three positive electrode core exposed portions 11c that are arranged at substantially regular intervals in the longitudinal direction indicated by an arrow $\gamma$. The positive electrode core exposed portion 11c is provided, for example, over the entire region in the width direction indicated by an arrow $\delta$ in the positive electrode core 11a. The positive electrode core exposed portion 11c is a predetermined region in the longitudinal direction on which the positive electrode mixture layer 11b is not applied. The above-described three positive electrode leads 20 are joined to the three positive electrode core exposed portions 11c, respectively. The three positive electrode leads 20 are joined at substantially regular intervals in the longitudinal direction of the long strip-shaped positive electrode core 11a, which makes it possible to shorten a current pathway in the longitudinal direction of the positive electrode 11, whereby internal resistance of the cylindrical battery 10 can be reduced. The positive electrode lead 20 is covered with an insulating tape 24, resulting in the suppression of a short circuit between the positive electrode 11 and the negative electrode 12. The insulating tape 24 preferably covers all of the positive electrode core exposed portion 11c.

As illustrated in FIG. 3, the negative electrode 12 has the negative electrode core 12a and the negative electrode mixture layer 12b formed on each surface of the negative electrode core 12a. For the negative electrode core 12a, there can be used a foil of a metal such as copper or a copper alloy, the foil being stable in a potential range of the negative electrode 12, a film in which such a metal is provided on a surface layer thereof, or the like. The negative electrode mixture layer 12b includes a negative electrode active material, and a binder. The negative electrode 12 can be produced by, for example, applying a negative electrode mixture slurry including a negative electrode active material, a binder, and the like on a negative electrode core 12a, drying the resulting coating film, and then compressing the coating film to form a negative electrode mixture layer on each surface of the core.

For the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer 12b. For the negative electrode active material, a metal alloyed with lithium other than Si, an alloy containing such a metal, a compound containing such a metal, and the like may be used.

For the binder included in the negative electrode mixture layer 12b, fluororesin, PAN, polyimide resin, acrylic resin, polyolefin resin, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

For the separator 13, a porous sheet having an ion permeation property and an insulation property is used. Specific examples of the porous sheet include a fine porous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13. Note that the negative electrode 12 may include a winding start end of the electrode assembly 14, but the separator 13 generally extends beyond a winding start side end of the negative electrode 12, and a winding start side end of the separator 13 becomes the winding start end of the electrode assembly 14.

As illustrated in FIG. 1, the cylindrical battery 10 comprises an insulating plate 18 arranged on the upper side of the electrode assembly 14. The positive electrode lead 20 attached to the positive electrode 11 extends toward the sealing assembly 17 through a through hole in the insulating plate 18. The sealing assembly 17 has an upper current collector 40 and a sealing plate 27. The upper current collector 40 is an annular metal plate member, and has a through hole 40a at a center portion in a radial direction. The sealing plate 27 is a metal plate-like member that has no through hole and with which an opening of the exterior housing can 16 is capped.

Each positive electrode lead 20 is bent along an upper surface 45 of the upper current collector 40 through the through hole 40a in the upper current collector 40 from the positive electrode 11. A tip portion of each positive electrode lead 20 is joined to the upper surface 45 of the upper current collector 40. This joint is achieved by, for example, laser welding. An outer circumference portion of the upper current collector 40 is in contact with the sealing plate 27. An outer circumference portion 47 of the upper current collector is preferably joined to the sealing plate 27 by laser welding or the like. The annular upper surface 45 of the upper current collector 40 has an annular recess portion 45a on a radially inner side of the outer circumference portion. A bottom surface 45b of the recess portion 45a spreads in a direction substantially perpendicular to the axial direction. Since the upper surface 45 of the upper current collector 40 has the recess portion 45a recessed downward, a space is provided between the sealing plate 27 and the recess portion 45a of the upper current collector 40. Each positive electrode lead 20 is housed in the recess portion 45a.

The cylindrical battery 10 has a lower current collector 19 made of metal such as nickel or a nickel alloy on an axially outer (lower) side than the electrode assembly 14. The negative electrode exposed portion 12c of the electrode assembly 14 is joined to the lower current collector 19. The lower current collector 19 is joined to an inner surface 68a of the bottom plate 68 of the exterior housing can 16. Now, the structure of the lower current collector 19, the joining of the negative electrode core exposed portion 12c to the lower current collector 19, and the joining of the lower current collector 19 to the bottom plate 68 of the exterior housing can 16 will be described in detail.

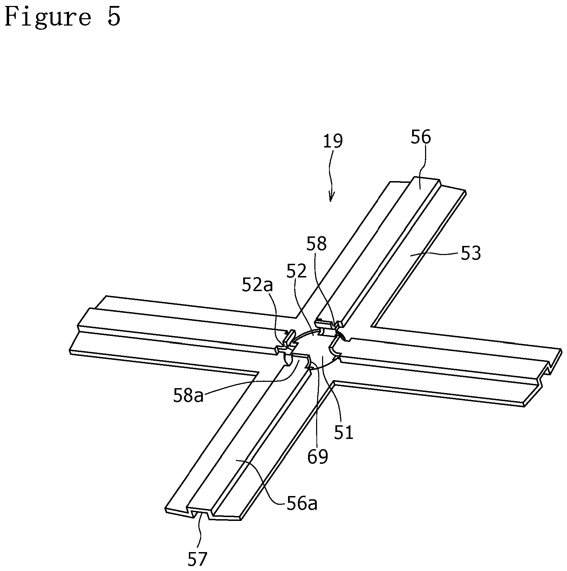

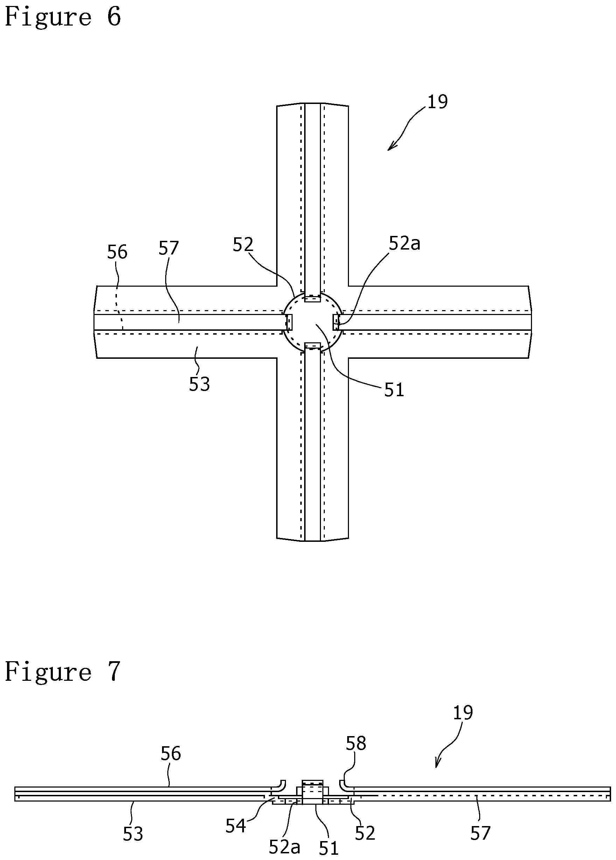

FIG. 5 is a perspective view of the lower current collector 19, and FIG. 6 is a plan view of the lower current collector 19 when viewed in the thickness direction from an opposite side to a side on which the negative electrode core is joined. FIG. 7 is an axial sectional view of the lower current collector 19. As illustrated in FIGS. 5 and 6, the lower current collector 19 has, at a center portion in a radial direction, a flat plate portion 51 having a substantially circular shape in a plan view. The flat plate portion 51 has no through hole, so that gas cannot pass through the flat plate portion 51. In the example illustrated in FIGS. 5 to 7, the flat plate portion 51 has a disc shape. However, the flat plate portion may have any flat plate shape having no through hole. The shape of the flat plate portion in a plan view may have any shape other than a circle, or may have, for example, a rectangular shape. The lower current collector 19 has a plurality of radially extending portions 53 that are connected to the flat plate portion 51 via a connecting portion 52, and in the present embodiment, has four radially extending portions 53. The radially extending portion 53 has a pillar shape, and extends in the radial direction. A plurality of radially extending portions 53 are preferably arranged at equal intervals in the circumferential direction. The connecting portion 52 is provided with a plurality of through holes 52a arranged at intervals in the circumferential direction, and in the present embodiment, is provided with four through holes 52a. The plurality of through holes 52a are preferably arranged at equal intervals in the circumferential direction. Note that the connecting portion may have only one through hole.

As illustrated in FIG. 7, the connecting portion 52 is connected to the radially extending portions 53 via a step portion 54, and a bottom surface of the flat plate portion 51 is located on an axially lower side than the bottom surfaces of the radially extending portions 53. This enables the bottom surface of the flat plate portion 51 to be in close contact with an inner surface 68a of the bottom plate 68 without a space therebetween when the flat plate portion 51 is joined as described later, which makes it easy to achieve good joining of the flat plate portion 51. As illustrated in FIG. 5, the radially extending portion 53 has a ridge portion 56 on the side on which the negative electrode core is joined. The ridge portion 56 is provided at a center in the width direction of the radially extending portion 53, and projects in the thickness direction. The ridge portion 56 extends in the radial direction. A radially extending groove 57 is provided at a portion overlapping with the ridge portion 56 in the thickness direction, on a surface of the radially extending portion 53 on an opposite side to a side on which the negative electrode core is joined. The center portion in the width direction in the surface of the radially extending portion 53 on the opposite side to the side on which the negative electrode core is joined is subjected to press processing by a predetermined distance in the radial direction and toward the side on which the negative electrode core is joined when viewed in the thickness direction. The ridge portion 56 and the groove 57 are formed by this press processing.

The ridge portion 56 forms a joint portion to which the negative electrode core exposed portion 12c is joined. To be specific, laser light is emitted toward a bottom of the groove 57 from the opposite side to the side on which the negative electrode core is joined in the radially extending portion 53 in a state where the negative electrode core exposed portion 12c forming the axial lower side of the electrode assembly 14 is pressed against the ridge portion 56. This emission of the laser light enables the negative electrode core exposed portion 12c of the electrode assembly 14 to be joined to the ridge portion 56 by laser welding.

As illustrated in FIG. 5, all the through holes 52a are located radially outward than the flat plate portion 51 and radially inward than the ridge portion (joint portion) 56. The lower current collector 19 further has one or more projections 58. The projection 58 is located on the more radially outward side than the flat plate portion 51 and on the more radially inward side than the ridge portion 56. The projection 58 projects up to a position higher than a tip surface 56a of the ridge portion 56. The number of projections 58 coincides with the number of radially extending portions 53. The projection 58 includes a portion located on an extension line on the radially inward side in the ridge portion 56 of the corresponding radially extending portion 53 and includes a facing portion 58a radially facing an upper region of the tip surface 56a of the ridge portion 56.

When the negative electrode core exposed portion 12c is pressed against the ridge portion 56 for joining them, the negative electrode core exposed portion 12c may be tilted inward toward the flat plate portion 51 side. Even if the negative electrode core exposed portion 12c is tilted inward toward the flat plate portion 51 side, the projection 58 is provided to prevent the tip portion on the radially inward side of the inward tilting portion from reaching the position overlapping with the flat plate portion 51 in the thickness direction. The reason why it is not preferable that the tip portion on the radially inward side of the inward tilting portion reaches the position overlapping with the flat plate portion 51 in the thickness direction will be described later.

The number of projections 58 coincides with the number of through holes 52a. The projection 58 includes a bending portion 69 that is bent from an edge of an opening on the electrode assembly 14 side of the through hole 52a. In the present embodiment, the projection 58 is formed in the lower current collector 19 as follows. To be specific, a cut is made in a through hole former in the lower current collector 19. Then, a portion where the cut is made in the lower current collector 19 is bent toward a side on which the electrode assembly is joined when viewed in the thickness direction and is folded back toward the electrode assembly 14. This bending processing (folding-back processing) is performed to thereby form the projection 58 and form the through hole 52a. Note that the projection may be formed by joining a metal piece to the lower current collector having the through hole. In the present embodiment, the plurality of projections 58 are arranged at substantially the same radial positions in the lower current collector 19 at intervals in the circumferential direction, but the lower current collector may be configured to have one annular projection.

As illustrated in FIG. 1, the disc-shaped flat plate portion 51 and all the through holes 52a are present at a position axially overlapping with a hollow 14a of the electrode assembly 14. A circular thin thickness portion 71 having a center matching a radial center of the bottom plate 68 is provided in the bottom surface 68b of the bottom plate 68 of the exterior housing can 16. The thin thickness portion 71 forms an easy-to-rupture portion. A portion surrounded by the circular thin thickness portion 71 in the bottom plate 68 forms a safety vent 72. All the through holes 52a in the lower current collector 19 axially overlaps with the safety vent 72. When abnormal heat generation occurs in the cylindrical battery 10, the thin thickness portion 71 is configured to rupture. In this way, an opening is formed at a position where the safety vent 72 is present, so that high-temperature gas in the battery is configured to be discharged to the outside. Although in the present embodiment, the case has been described in which the circular thin thickness portion 71 forms an easy-to-rupture portion, for example, a C-shaped thin thickness portion may be provided on a bottom side of the bottom plate to form an easy-to-rupture portion, and the shape of the thin thickness portion is not limited to a circular shape and a C shape as long as an opening can be formed in a position where the safety vent 72 is present.

The exterior housing can 16 has an annular grooved portion 35 in a part in the axial direction of a cylindrical outer circumferential surface. The grooved portion 35 can be formed by, for example, recessing a part of the cylindrical outer circumferential surface toward the radially inward side by radially inward spinning processing. The sealing assembly 17 is disposed on the grooved portion 35 and is fixed by caulking to an opening of the exterior housing can 16 with the gasket 28 interposed between the sealing assembly 17 and the exterior housing can 16. A portion between the exterior housing can 16 and the sealing assembly 17 is sealed with the annular gasket 28, and an internal space of the battery case 15 is sealed. The gasket 28 is held between the exterior housing can 16 and the sealing assembly 17, and insulates the sealing assembly 17 from the exterior housing can 16. The gasket 28 has a role of a sealing material for maintaining the airtightness of the inside of the battery, and a role as an insulating material for insulating the sealing assembly 17 from the exterior housing can 16.

In the cylindrical battery 10, the sealing plate 27 electrically connected to the positive electrode lead 20 becomes a positive electrode terminal, and the exterior housing can 16 electrically connected to the negative electrode core exposed portion 12c via the lower current collector 19 becomes a negative electrode terminal. Although in the present embodiment, the case has been described in which the plurality of positive electrode leads 20 are electrically connected to the sealing plate 27, only one positive electrode lead may be electrically connected to the sealing plate. Alternatively, the upper current collector having the same configuration as the lower current collector may be disposed on the axial upper side of the electrode assembly. Then, the band-shaped positive electrode core exposed portion provided from one end to the other end in the width direction of the positive electrode on the axial upper side of the positive electrode may be joined to the upper current collector. Then, the upper current collector may be electrically connected to the sealing assembly.

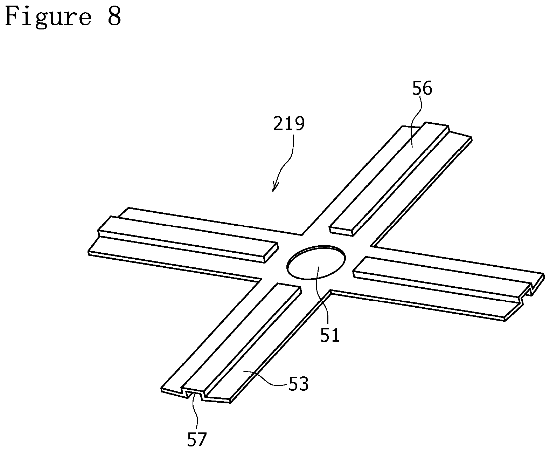

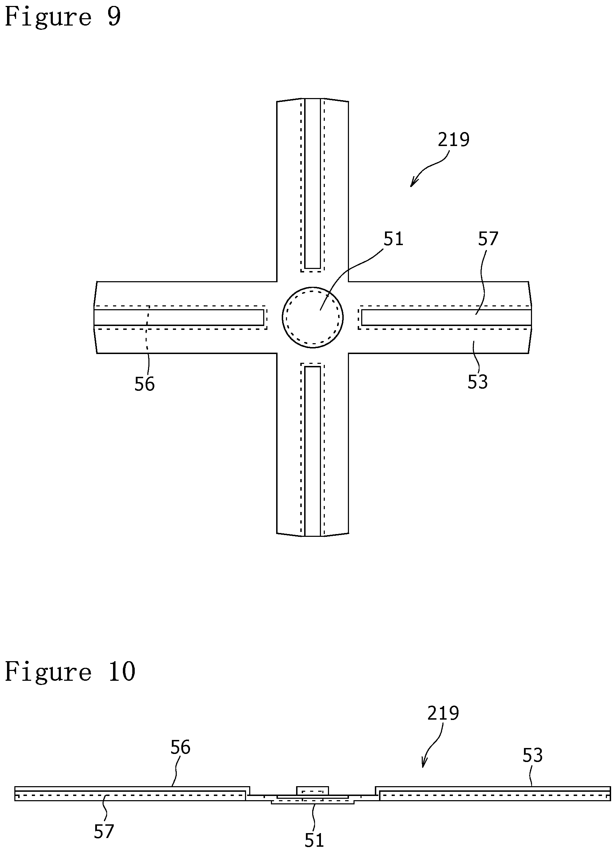

Now, the functional effects of the cylindrical battery 10 will be described by comparing the cylindrical battery 10 of the present disclosure with a cylindrical battery using a lower current collector of a comparative example. FIG. 8 is a perspective view of a lower current collector 219 of the comparative example, and FIG. 9 is a plan view of the lower current collector 219 when viewed in the thickness direction from an opposite side to a side on which the negative electrode core is joined. FIG. 10 is an axial sectional view of the lower current collector 219. As illustrated in FIGS. 8 to 10, the lower current collector 219 is different from the lower current collector 19 illustrated in FIGS. 5 to 7 in that the lower current collector 219 has no through hole 52a and has no projection 58, and the other configurations of the lower current collector 219 are the same as those of the lower current collector 19 illustrated in FIGS. 5 to 7.

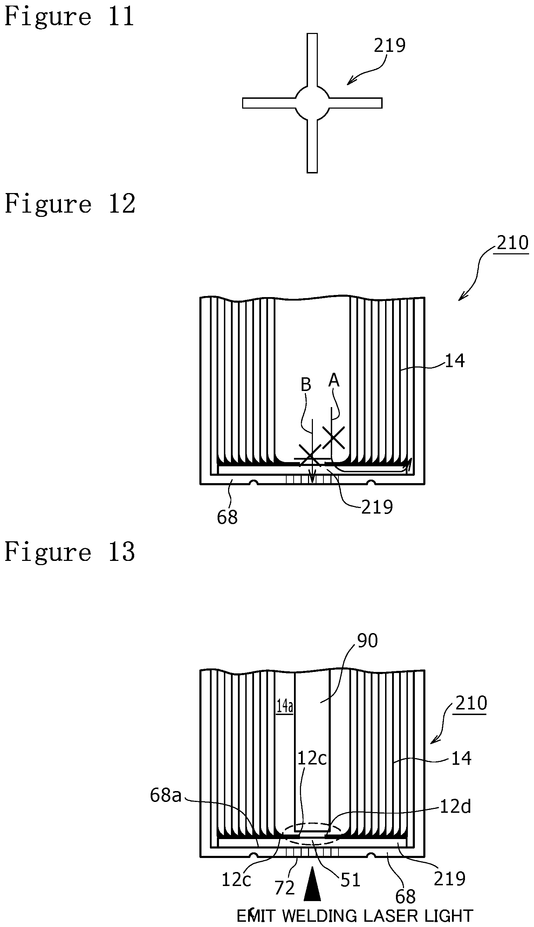

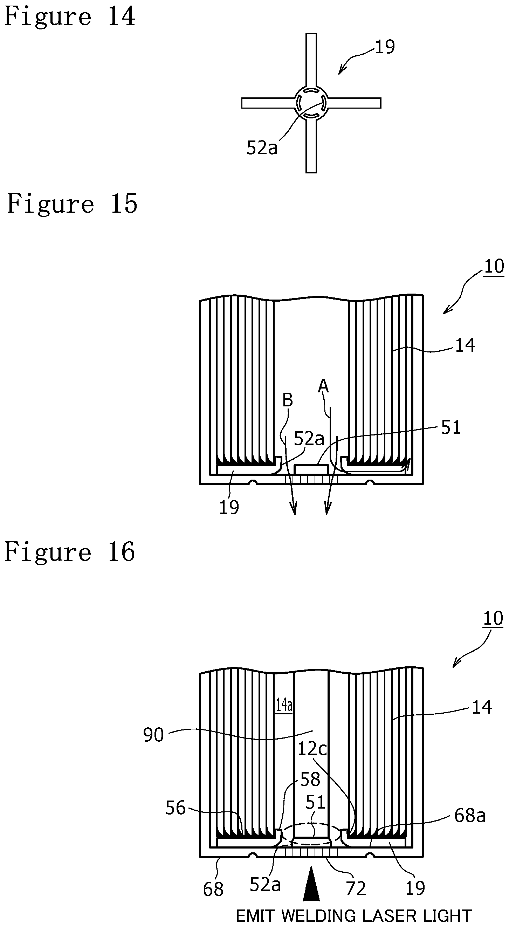

FIG. 11 is a schematic plan view of the lower current collector 219 of the comparative example, and FIG. 12 is a schematic sectional view of an axial lower side of a cylindrical battery 210 of the comparative example comprising the lower current collector 219. FIG. 13 is a diagram for illustrating a method of joining the lower current collector 219 to the bottom plate 68. FIG. 14 is a schematic plan view of the lower current collector 19, and FIG. 15 is a schematic sectional view of an axial lower side of the cylindrical battery 10. FIG. 16 is a diagram for illustrating a method of joining the lower current collector 19 to the bottom plate 68.

As illustrated in FIG. 12, in the cylindrical battery 210 of the comparative example, the lower current collector 219 has no through hole 52a, so that an electrolyte and gas cannot pass through the lower current collector 219. Accordingly, since a permeation pathway for the electrolyte passing through the lower current collector 219 as indicated by an arrow A is not present, it becomes difficult for the electrolyte to smoothly permeate the inside of the cylindrical battery 210. Since a pathway for the gas passing through the lower current collector 219 as indicated by an arrow B is not present, it becomes difficult for the high-temperature gas to smoothly flow in the safety vent even when abnormal heat generation occurs in the cylindrical battery 210 and the safety vent in the can bottom opens.

The lower current collector 219 further has no projection 58. Accordingly, as illustrated in FIG. 13, when the negative electrode core exposed portion 12c of the electrode assembly 14 is pressed against the ridge portion of the lower current collector 219, the negative electrode core exposed portion 12c is tilted inward, and the tip portion 12d on the radially inward side of the negative electrode core exposed portion 12c that is tilted inward easily overlaps with the flat plate portion 51 centrally located in the radial direction in the thickness direction. Therefore, the tip portion 12d of the negative electrode core exposed portion 12c intrudes into between a welding rod 90 and the flat plate portion 51, which makes it difficult to firmly press the flat plate portion 51 by the welding rod 90 and to obtain good welding of the lower current collector 219 to the bottom plate 68.

In contrast, according to the cylindrical battery 10 of the present embodiment, as illustrated in FIG. 14, the one or more through holes 52a are present on the radially outside of the flat plate portion 51 located at a center portion of the lower current collector 19. Accordingly, as illustrated in FIG. 15, it is easy for the electrolyte to smoothly permeate the inside of the cylindrical battery 10 through the permeation pathway for the electrolyte passing through the lower current collector 219 as indicated by the arrow A. In the case where abnormal heat generation occurs in the cylindrical battery 10 and the safety vent in the can bottom opens, the high-temperature gas can smoothly reach the safety vent through the pathway for the gas passing through the lower current collector 19 as indicated by the arrow B. Therefore, the high-temperature gas can be smoothly discharged to the outside and high safety can be achieved. In the case where all the through holes 52a are present at positions axially overlapping with the safety vent 72 as illustrated in FIG. 1, the high-temperature gas can be further efficiently discharged to the outside via the safety vent.

As further described, in the cylindrical battery 10 of the present embodiment, the disc-shaped flat plate portion 51 having no through hole is present at a position axially overlapping with the hollow 14a of the electrode assembly 14, and the lower current collector 19 has, on the radially outward side of the flat plate portion 51, the projection 58 that projects on the more axially upper side than the ridge portion 56. Accordingly, as illustrated in FIG. 16, even when the negative electrode core exposed portion 12c is tilted inward when the negative electrode core exposed portion 12c of the electrode assembly 14 is pressed against the ridge portion 56 of the lower current collector 19, the projection 58 can prevent the portion where the negative electrode core exposed portion 12c is tilted inward from reaching the position axially overlapping with the flat plate portion 51. Therefore, a synergistic effect of the configuration in which the flat plate portion 51 has no through hole and the configuration in which inward tilting of the negative electrode core exposed portion 12c does not reach the position axially overlapping with the flat plate portion 51 is used to enable the flat plate portion 51 to be firmly pressed against the bottom plate 68 by a tip surface of the welding rod 90 in the state where a broad range portion of the tip surface of the welding rod 90 is in close contact with the flat plate portion 51. Accordingly, since the laser light is emitted from the can bottom side in the state where the flat plate portion 51 is in close contact with the inner surface 68a of the bottom plate 68 to laser-weld the flat plate portion 51 to the bottom plate 68, good welding of the lower current collector 19 to the bottom plate 68 can be achieved. When the safety vent is in operation, the projection 58 can prevent the hollow 14a and the through holes 52a from being closed by inward tilting of the negative electrode core exposed portion 12c, thereby providing the effect of reliably ensuring a gas discharge pathway in which gas passes through the through holes 52a from the hollow 14a to reach the safety vent. The projection 58 also serves as radial positioning of the lower current collector 19 with respect to the hollow 14a. This can prevent the through holes 52a from deviating with respect to the hollow 14a, thereby providing the effect of reliably ensuring a gas discharge pathway in which gas passes through the through holes 52a from the hollow 14a to reach the safety vent.

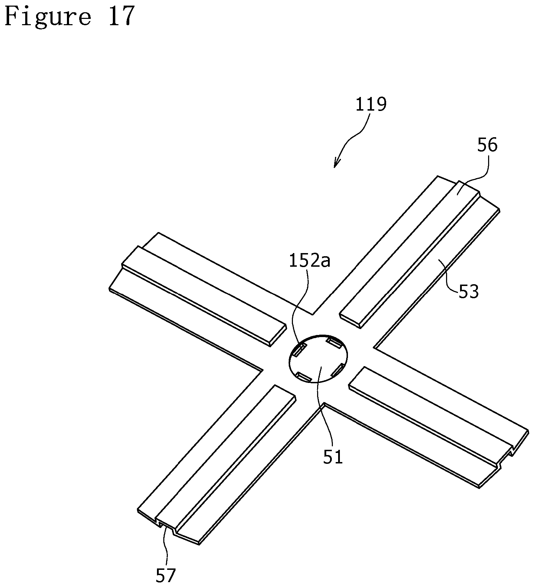

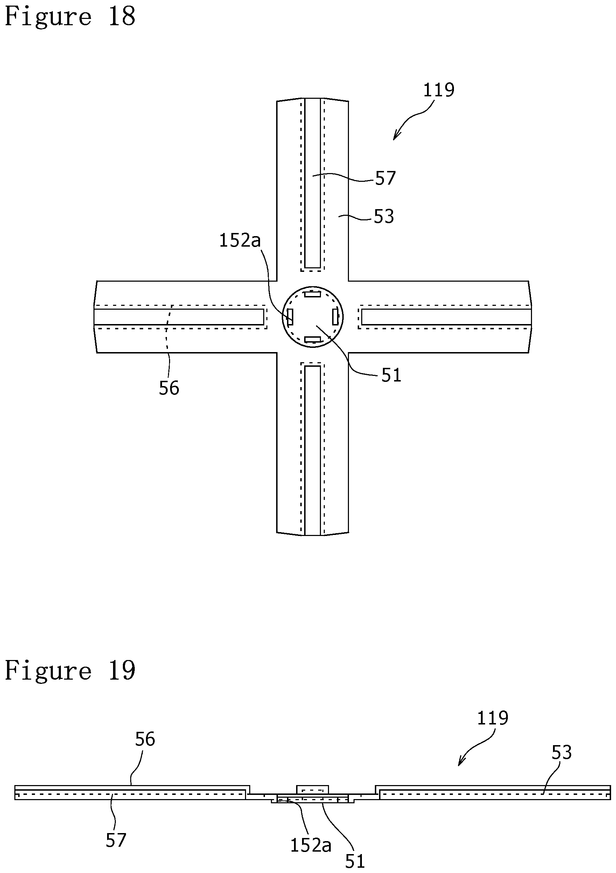

In the above-described embodiment, the case has been described in which the lower current collector 19 has the one or more projections 58. However, as described below, the lower current collector may have no projection 58. FIG. 17 is a perspective view of the lower current collector 119 of a modified example, and FIG. 18 is a plan view of the lower current collector 119 when viewed in the thickness direction from an opposite side to a side on which the negative electrode core is joined. FIG. 19 is an axial sectional view of the lower current collector 19. As illustrated in FIGS. 17 to 19, the lower current collector 119 has a flat plate portion 51 located at a center portion in a radial direction, and one or more through holes 152a that are located on the radially outward side of the flat plate portion 51. The lower current collector 119 has no projection 58. The shape of the through hole 152a in the lower current collector 119 is slightly different from the shape of the through hole 52a in the lower current collector 19. The other configurations of the lower current collector 119 is the same as those of the lower current collector 19.

[Gas Discharge Test]

Each of a cylindrical battery of Example 1, a cylindrical battery of Example 2, and a cylindrical battery of a comparative example was subjected to a gas discharge test, and gas discharge performance was evaluated.

<Cylindrical Battery of Example 1>

The cylindrical battery 10 (see FIG. 1) comprising the lower current collector 19 (see FIGS. 5 to 7) was used as a cylindrical battery of Example 1. An inner diameter of a cylindrical portion 16a (see FIG. 1) of the exterior housing can 16 of the cylindrical battery 10 was set to 44.86 [mm]. And a diameter (stamp diameter) of the circular thin thickness portion 71 was set to 32 [mm]. An outer diameter of the electrode assembly 14 was set to 43.4 [mm], and a diameter (hollow diameter) of the hollow 14a of the electrode assembly 14 was set to 5 [mm]. An outer diameter of the lower current collector 19 was set to 43 [mm], and a width of the radially extending portion 53 of the lower current collector 19 was set to 7 [mm]. A diameter of a center projecting portion that is in contact with the bottom plate 68 in the lower current collector 19 was set to 6 [mm], and a diameter of a weld to be welded to the bottom plate 68 in the lower current collector 19 was set to 4 [mm]. A width of the groove 57 of the radially extending portion 53 was set to 1.5 [mm]. Note that these dimensions are also the same as those of the cylindrical battery 10 of Example 2 and the cylindrical battery 210 of the comparative example which are described below.

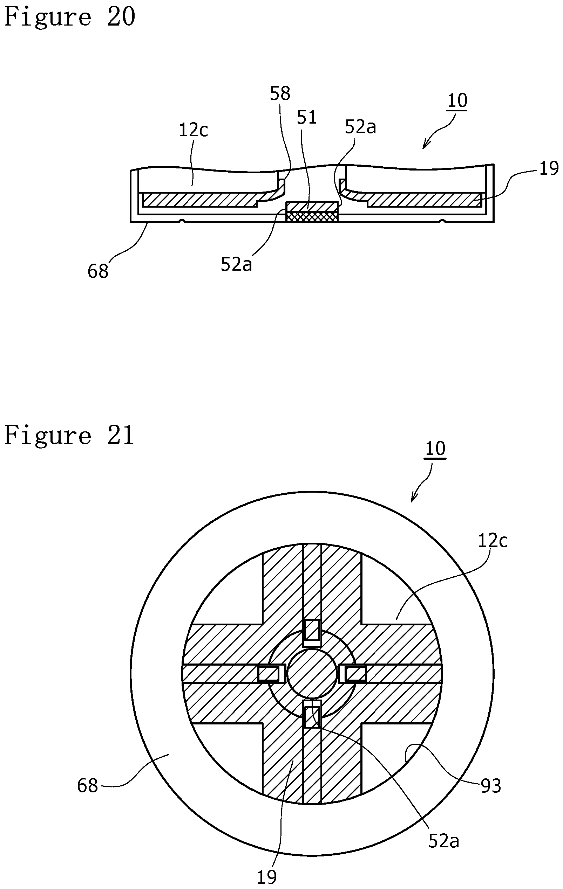

FIG. 20 is a schematic sectional view of an axial lower end of the cylindrical battery 10, and FIG. 21 is a plan view of the cylindrical battery 10 in a state where an easy-to-rupture portion ruptures and the safety vent 72 scatters, when viewed from an axial lower side. In FIG. 21, a region indicated by diagonal lines is a region that is closed by the lower current collector 19 in the opening 93 due to scattering of the safety vent 72. Regarding the cylindrical battery 10 in the state where an easy-to-rupture portion ruptures and the safety vent 72 scatters as illustrated in FIG. 21, an area that can contribute to the gas discharge was measured. The gas can pass through the inside of the electrode assembly 14. An area in which the bottom plate 68 of the cylindrical battery 10 was exposed to the opening 93 without being inhibited by the lower current collector 19 in the electrode assembly 14 was 408.8 [$mm^2$]. In the cylindrical battery 10 of Example 1, four through holes 52a were exposed to the opening 93, and the area was 1.5 [$mm^2$] $\times$ 4 = 6 [$mm^2$].

<Cylindrical Battery of Example 2>

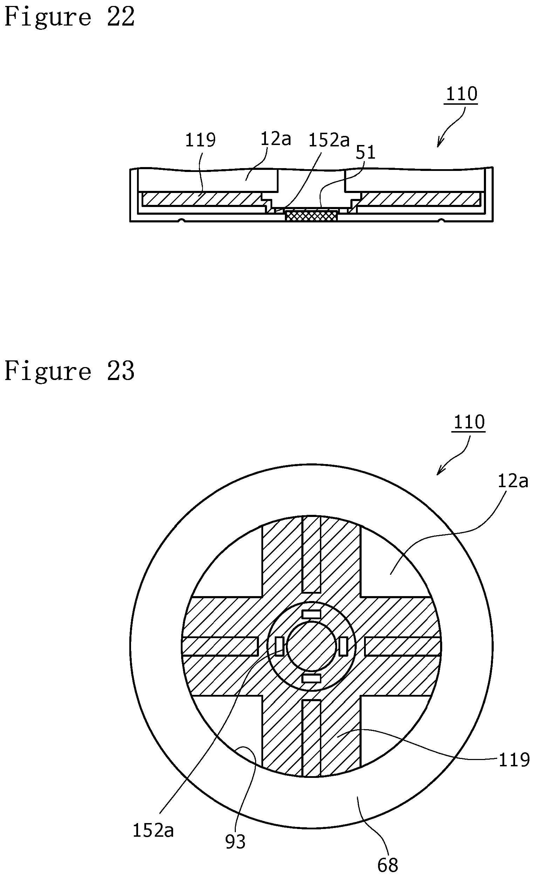

A cylindrical battery different from the cylindrical battery 10 of Example 1 only in that the lower current collector 19 was replaced with the lower current collector 119 (see FIGS. 17 to 19) of the modified example was used as a cylindrical battery of Example 2. FIG. 22 is a schematic sectional view of an axial lower end of a cylindrical battery 110, and FIG. 23 is a plan view of the cylindrical battery 110 in a state where an easy-to-rupture portion ruptures and the safety vent 72 scatters, when viewed from an axial lower side. In FIG. 23, a region indicated by diagonal lines is a region that is closed by the lower current collector 119 in the opening 93 due to scattering of the safety vent 72. Regarding the cylindrical battery 110 in the state where an easy-to-rupture portion ruptures and the safety vent 72 scatters as illustrated in FIG. 23, an area that can contribute to the gas discharge was measured. An area in which the bottom plate 68 of the cylindrical battery 110 was exposed to the opening 93 without being inhibited by the lower current collector 119 in the electrode assembly 14 was 408.8 [$mm^2$]. In the cylindrical battery 110 of Example 2, four through holes 152a were exposed to the opening 93, and the area was 0.75 [$mm^2$] $\times$ 4 = 3 [$mm^2$].

<Cylindrical Battery of Comparative Example>

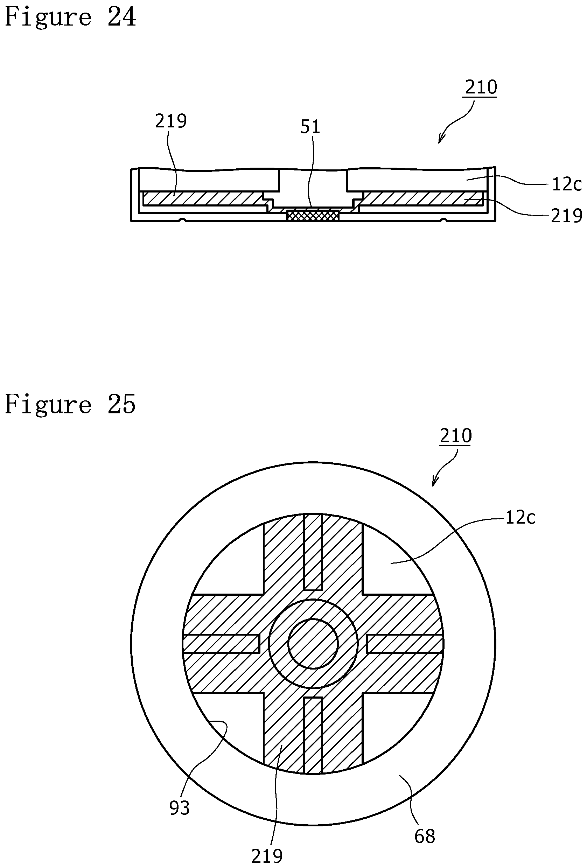

A cylindrical battery different from the cylindrical battery 10 of Example 1 only in that the lower current collector 19 was replaced with the lower current collector 219 (see FIGS. 8 to 10) of the comparative example was used as a cylindrical battery of Example 2. FIG. 24 is a schematic sectional view of an axial lower end of a cylindrical battery 210, and FIG. 25 is a plan view of the cylindrical battery 210 in a state where an easy-to-rupture portion ruptures and the safety vent 72 scatters, when viewed from an axial lower side. In FIG. 25, a region indicated by diagonal lines is a region that is closed by the lower current collector 219 in the opening 93 due to scattering of the safety vent 72. Regarding the cylindrical battery 210 in the state where an easy-to-rupture portion ruptures and the safety vent 72 scatters as illustrated in FIG. 25, an area that can contribute to the gas discharge was measured. The area was only 408.8 [$mm^2$] in which the bottom plate 68 of the cylindrical battery 210 was exposed to the opening 93 without being inhibited by the lower current collector 219 in the electrode assembly 14.

(Test Contents)

When each cylindrical battery 10, 110, 210 was subjected to the heating test in a fully charged state, the safety vent opened at 140°C in all the cylindrical batteries, and gas discharge was started from the inside of the cylindrical battery 10, 110, 210. In each cylindrical battery 10, 110, 210, the gas flow velocity was measured when gas was discharged.

(Test Results)

[Table 1]

| | | Example 1 | Example 2 | Comparative example |
|---|---|---|---|---|
| Through hole (discharge hole) | | 4 places [6 $mm^2$] | 4 places [3 $mm^2$] | No |
| Projection (protrusion) | | Yes | No | No |
| Discharge area | Electrode assembly potion [$mm^2$] | 408.8 | 408.8 | 408.8 |
| | Discharge hole [$mm^2$] | 6 | 3 | 0 |

(continued)

| | | Example 1 | Example 2 | Comparative example |
|---|---|---|---|---|
| Discharge capacity (Flow velocity [m/s] x Area [mm²]) | Electrode assembly portion [mm³/s] | $8.18 \times 10^6$ | $8.18 \times 10^6$ | $8.18 \times 10^6$ |
| | Discharge hole [mm³/s] | $9.60 \times 10^5$ | $4.80 \times 10^5$ | 0 |
| | Total [mm³/s] | $9.14 \times 10^6$ | $8.66 \times 10^6$ | $8.18 \times 10^6$ |
| | Capacity increase rate | 110.5% | 105.5% | 100% |

In all of the cylindrical batteries 10, 110, and 210, gas flow velocity of 20 [m/s] was produced in a pathway from an electrode assembly potion (a portion including the electrode plate and the separator) to the safety vent. On the other hand, in Examples 1 and 2, in addition to the gas flow velocity of 20 [m/s] in the pathway from the electrode assembly potion to the safety vent, gas flow velocity of 160 [m/s] was produced in a pathway to the safety vent through the hollow 14a and the through holes (discharge holes) 52a, 152a. Therefore, Table 1 was obtained by comparing the discharge capacity using [flow velocity [m/s] × discharge area [mm²]]. For example, a numeral value in a total column in Example 1 was calculated by the following equation (1).

$$9.14 \times 10^6 \ [\text{mm}^3/\text{s}] = 408.8 \ [\text{mm}^2] \times 20 \ [\text{m/s}] + 6 \ [\text{mm}^2] \times 160 \ [\text{m/s}] \ ... \ (1)$$

From the test results, it was confirmed that in Example 1, the discharge capacity was improved by 10.5%, and in Example 2, the discharge capacity was improved by 5.5 %, as compared with the comparative example.

(Modified Example)

The present disclosure is not limited to the above embodiment and modified examples thereof, and various improvements and changes are possible within the matters described in the scope of the claims of the present application and the equivalents thereof. For example, in the above embodiment, the through holes 52a were provided at positions axially overlapping with the hollow 14a of the electrode assembly 14, but the through holes in the current collector may be provided at positions not axially overlapping with the hollow 14a of the electrode assembly 14. The through holes 52a were provided at positions axially overlapping with the safety vent 72, but the through holes in the current collector may be provided at positions not axially overlapping with the safety vent.

The current collector (lower current collector 19) of the present disclosure was disposed on the more axially lower side than the electrode assembly 14 and the safety vent was provided in the can bottom, but the current collector of the present disclosure may be disposed on the more axially lower side than the electrode assembly 14 and the safety vent may be provided in the sealing assembly on the axially upper side. Also in this case, using the current collector of the present disclosure enables the electrolyte to smoothly permeate. The current collector of the present disclosure may be disposed on the more axially upper side than the electrode assembly, or the current collector of the present disclosure may be disposed on the more axially lower side than the electrode assembly and disposed on the more axially upper side than the electrode assembly.

When the current collector of the present disclosure is disposed on a side on which the safety vent is provided with respect to the electrode assembly regarding the axial direction, high-temperature gas can be smoothly guided to the safety vent via the through holes in the current collector when the safety vent is in operation, and the gas can be efficiently discharged, which is preferable. It is needless to say that when the current collector of the present disclosure is disposed on the more axially upper side than the electrode assembly, the axially upper end of the electrode assembly is composed of the core exposed portion in one electrode, and the core exposed portion is joined to the current collector.

REFERENCE SIGNS LIST

10, 110 cylindrical battery, 11 positive electrode, 11a positive electrode core, 11b positive electrode mixture layer, 11c positive electrode core exposed portion, 12 negative electrode, 12a negative electrode core, 12b negative electrode mixture layer, 12c negative electrode core exposed portion, 12d tip portion, 13 separator, 14 electrode assembly, 14a hollow, 15 battery case, 16 exterior housing can, 16a cylindrical portion, 17 sealing assembly, 18 insulating plate, 19, 119 lower current collector, 20 positive electrode lead, 24 insulating tape, 27 sealing plate, 28 gasket, 35 grooved portion, 40 upper current collector, 40a through hole, 45 upper surface, 45a recess portion, 45b bottom surface, 47 outer circumference portion, 51 flat plate portion, 52 connecting portion, 52a, 152a through hole, 53 radially extending portion, 54 step

**EP 4 471 971 A1**

portion, 56 ridge portion, 56a tip surface, 57 groove, 58 projection, 58a facing portion, 68 bottom plate, 68a inner surface, 68b bottom surface, 69 bent portion, 71 thin thickness portion, 72 safety vent, 90 welding rod, 93 opening formed after safety vent scatters

**Claims**

1.  A battery, comprising:

    an electrode assembly in which a long strip-shaped first electrode having a core exposed portion in which a first electrode core is exposed to one side in a width direction and a long strip-shaped second electrode are wounded with a separator interposed between the long strip-shaped first electrode and the long strip-shaped second electrode; and
    a current collector that has a flat plate portion that overlaps with a center portion of a hollow of the electrode assembly in an axial direction and has no through hole, a joint portion to which the core exposed portion is joined, and one or more through holes that are located on an outer circumferential side in a radial direction than the flat plate portion and on an inner side in the radial direction than the joint portion.

2.  The battery according to claim 1, comprising:

    a bottomed cylindrical exterior housing can that includes a bottom plate to which the flat plate portion is joined, wherein
    the bottom plate has a safety vent defined by a thin easy-to-rupture portion, and
    the one or more through holes overlap with the safety vent in the axial direction.

3.  The battery according to claim 1 or 2, wherein the current collector has one or more projections that are located radially outward than the flat plate portion and radially inward fthan the joint portion, and projecting further toward the second electrode side in the axial direction than the joint portion.

4.  The battery according to claim 3, wherein

    the number of the projections coincides with the number of the through holes, and
    the projections include a bending portion that is bent from an edge of an opening on the second electrode side of the through holes.

5.  A current collector to which an electrode core located on one side in an axial direction of a wound-type electrode assembly is joined, the current collector comprising:

    a flat plate portion that is located at a center portion and has no through hole;
    a joint portion that extends in a radial direction and to which the electrode core is joined; and
    one or more through holes that are located radially outward than the flat plate portion and radially inward than the joint portion.

6.  The current collector according to claim 5, comprising one or more projections that are located radially outward than the flat plate portion and radially inward than the joint portion, and that project up to a position higher than the joint portion.

7.  The current collector according to claim 6, wherein

    the number of the projections coincides with the number of the through holes, and
    the projections include a bending portion that is bent from an edge of an opening on the second electrode side of the through holes.

# Figure 1

Figure 2

Figure 3

Figure 4

# Figure 5

Figure 6

Figure 7

Figure 8

Figure 9

219

51

57

56

53

Figure 10

56

219

53

57

51

Figure 11

219

Figure 12

210

14

B A

68

219

Figure 13

90

14a

210

14

68a

12c

12d

12c  72  51  68  219

EMIT WELDING LASER LIGHT

Figure 14

19

52a

Figure 15

10

14

B  A

52a  51

19

Figure 16

10

14a

90

12c

58

51

56

68a

68  52a  72  19

EMIT WELDING LASER LIGHT

Figure 17

Figure 18

Figure 19

Figure 20

Figure 21

Figure 22

Figure 23

Figure 24

Figure 25

| | INTERNATIONAL SEARCH REPORT | International application No. |
|---|---|---|
| | | **PCT/JP2023/001893** |

**A.    CLASSIFICATION OF SUBJECT MATTER**

*H01M 50/538*(2021.01)i; *H01M 50/107*(2021.01)i; *H01M 50/342*(2021.01)i
FI:    H01M50/538; H01M50/342 101; H01M50/107

According to International Patent Classification (IPC) or to both national classification and IPC

**B.    FIELDS SEARCHED**

Minimum documentation searched (classification system followed by classification symbols)

H01M50/538; H01M50/107; H01M50/342

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2013/024774 A1 (HITACHI VEHICLE ENERGY, LTD.) 21 February 2013 (2013-02-21) | 1, 3, 5-6 |
| | claims 1, 4-5, paragraphs [0027]-[0031], [0035]-[0037], fig. 3, 4 | |
| Y | | 2 |
| Y | JP 2018-49680 A (SANYO ELECTRIC CO., LTD.) 29 March 2018 (2018-03-29) | 2 |
| | claim 1, paragraphs [0017], [0039]-[0054], fig. 1 | |
| A | JP 2012-185912 A (HITACHI VEHICLE ENERGY, LTD.) 27 September 2012 (2012-09-27) | 1-7 |
| A | JP 2001-210308 A (UCHIHASHI ESTEC CO., LTD.) 03 August 2001 (2001-08-03) | 1-7 |
| A | JP 2009-277643 A (PANASONIC CORP.) 26 November 2009 (2009-11-26) | 1-7 |
| A | JP 2014-53071 A (SANYO ELECTRIC CO., LTD.) 20 March 2014 (2014-03-20) | 1-7 |
| A | WO 2015/098866 A1 (SHIN-KOBE ELECTRIC MACHINERY CO., LTD.) 02 July 2015 (2015-07-02) | 1-7 |
| A | KR 10-2019-0136550 A (LG CHEM, LTD.) 10 December 2019 (2019-12-10) | 1-7 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT Information on patent family members | | | | International application No. PCT/JP2023/001893 | | |
|---|---|---|---|---|---|---|
| Patent document cited in search report | | | Publication date (day/month/year) | Patent family member(s) | | Publication date (day/month/year) |
| WO | 2013/024774 | A1 | 21 February 2013 | WO 2013/024542 A1 | | |
| JP | 2018-49680 | A | 29 March 2018 | WO 2016/121319 A1 | | |
| JP | 2012-185912 | A | 27 September 2012 | (Family: none) | | |
| JP | 2001-210308 | A | 03 August 2001 | (Family: none) | | |
| JP | 2009-277643 | A | 26 November 2009 | US 2010/0310927 A1 WO 2009/096160 A1 KR 10-2010-0096200 A CN 101889359 A | | |
| JP | 2014-53071 | A | 20 March 2014 | WO 2012/090599 A1 | | |
| WO | 2015/098866 | A1 | 02 July 2015 | US 2016/0343997 A1 CN 105849841 A | | |
| KR | 10-2019-0136550 | A | 10 December 2019 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007335156 A